# EUROPÄISCHE PATENTSCHRIFT

(11) **EP 4 077 112 B1**
(45) Veröffentlichungstag und Bekanntmachung des Hinweises auf die Patenterteilung: **20.12.2023**
(21) Anmeldenummer: 20810959.5
(22) Anmeldetag: 19.11.2020
(51) Int. Cl.: B62K 5/05, B62K 5/08, B62K 7/04, B62K 15/00

(54) **DREIRAD**
TRICYCLE
TRICYCLE

(30) Priorität: 19.12.2019 DE 102019135265
(43) Veröffentlichungstag der Anmeldung: 26.10.2022
(73) Patentinhaber: IKO Sportartikel-Handels GmbH, 83064 Raubling (DE)
(72) Erfinder: IRLBACHER, Konrad, 83101 Thansau (DE)
(74) Vertreter: Flach Bauer & Partner Patentanwälte mbB
(86) Internationale Anmeldenummer: PCT/EP2020/082760
(87) Internationale Veröffentlichungsnummer: WO 2021/121851

(56) Entgegenhaltungen:
- WO-A1-2011/032368
- CN-U- 203 142 891
- US-A1- 2013 105 238
- US-A1- 2014 262 578

## Beschreibung

Die Erfindung betrifft ein Dreirad nach dem Oberbegriff des Anspruchs 1. Dokument US2014/262578A1 zeigt die Präambel des Anspruchs 1.

Unter einem Dreirad wird üblicherweise ein Fahrzeug mit drei Rädern verstanden. Derartige Dreiräder sind beispielsweise auch als Kraftfahrzeuge hinlänglich bekannt, üblicherweise mit einer Hinterachse mit zwei seitlich versetzt zueinander angeordneten Hinterrädern und einem lenkbaren Vorderrad, welches symmetrisch zu den Hinterrädern in der Mittellängsebene angeordnet ist.

Derartige Dreiräder werden beispielsweise auch als Fahrradtaxis in einigen Großstädten eingesetzt, ebenso aber auch als Lastenfahrräder etc.

Ferner sind auch sogenannte "Trikes" bekannt, unter denen man üblicherweise ein offenes motorisiertes Straßenfahrzeug mit einem Vorderrad und zwei angetriebenen Hinterrädern versteht. Das lenkbare Vorderrad ist dabei ähnlich einem Motorrad ausgebildet, wohingegen die Hinterachskonstruktion und der Antrieb selbst eher mit einem vierrädrigen Kraftfahrzeug vergleichbar ist.

Schließlich sind auch noch Motorräder oder Motorroller bekannt, die mit einem Seitenausleger ausgestattet sind. In diesem Zusammenhang wird häufig von Beiwagenmaschinen gesprochen. Dabei handelt es sich um herkömmliche ein Vorderrad und ein Hinterrad aufweisende Fahrzeuge (Motorrad, Roller), die zur Erweiterung lediglich an einer Seite mit einem Beiwagen ausgestattet sind, der durch ein weiteres seitlich versetztes Hinterrad abgestützt wird.

Ein Dreirad ist aus der GB 664 012 A als bekannt zu entnehmen. Es weist eine Hinterachse mit zwei seitlich zueinander versetzt liegenden Hinterrädern auf. Über eine Lenkstange ist ein lenkbares Vorderrad zur Ermöglichung eine Kurvenfahrt für schwenkbar. Ferner verfügt das vorbekannte Dreirad über einen Sattel und über eine übliche Pedaleinrichtung, worüber mittels eines Zahnrades und einer umlaufenden Kette die Hinterachse und damit die beiden seitlich versetzten Hinterräder antreibbar sind.

Die Anordnung des Sattels, der Pedale, der Lenkstange und des Vorderrades sind zu einer vertikalen Längsebene seitlich asymmetrisch versetzt, sodass auf einer Längsseite dazu ein größerer Abstandsraum zum entfernter liegenden Hinterrad gebildet ist. In diesem Raum ist ein Seitenwagen oder Beiwagen untergebracht.

Ein Dreirad mit asymmetrisch angeordneter vertikaler Längsebene, in der der zentrale Teil des Fahrradrahmens mit einer Pedaleinrichtung und einem lenkbaren Vorderrad angeordnet sind, ist zudem auch aus der FR 823 558 A zu entnehmen.

Aufgabe der vorliegenden Erfindung ist es, ein verbessertes Dreirad zu schaffen, welches insbesondere auch Vorteile im Einsatz aufweist.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Bei dem erfindungsgemäßen Dreirad kann es sich bevorzugt um ein mittels Muskelkraft antreibbares Dreirad handeln, welches üblicherweise, wie herkömmliche Fahrräder auch, über Pedale und ein Tretlager entsprechend angetrieben wird, beispielsweise über eine Kette mit oder ohne einerweiteren Gangschaltung etc.

Möglich ist aber auch, dass das erfindungsgemäße Dreirad vergleichbar einem E-Bike mit einem zusätzlichen Elektromotor ausgestattet ist, der bei Bedarf zugeschaltet werden kann, beispielsweise durch Treten. Schließlich kann das erfindungsgemäße Dreirad auch mit einem Elektromotor ausgestattet und nur elektromotorisch antreibbar sein, also ohne eine Möglichkeit das Dreirad mittels Muskelkraft antreiben zu können.

Das erfindungsgemäße Dreirad zeichnet sich dadurch aus, dass das Dreirad nicht nur durch seine konstruktiven Gegebenheiten die geschilderten Vorteile aufweist, sondern alternativ oder ergänzend auch eine Möglichkeit aufweist, die Sitzposition zu verändern.

Dabei ist im Rahmen der Erfindung vorgesehen, dass die Sitzposition gegenüber der Lauffläche der Räder, also zumindest mit einer Komponente in Vertikalrichtung und damit in unterschiedlicher Höhenlage einstellbar ist und/oder zumindest mit einer Komponente in Längs- oder Horizontalrichtung in unterschiedlicher Längslage bezogen auf die Anordnung der Räder einstellbar ist.

Insbesondere eine Verstellung des Sitzes relativ zu den Rädern, also beispielsweise näher auf die Pedale zu oder weiter von diesen weg, kann einfach vorgenommen werden, bevorzugt dadurch, dass der Sitz an einem zumindest überwiegend in Längsrichtung des Dreirads verlaufenden Oberrohres in dessen Längsrichtung verstellbar und an einer beliebig gewünschten Stelle arretiert werden kann.

Eine Verstellung in Vertikalrichtung wird bevorzugt dadurch erreicht, dass der Fahrradrahmen eine Oberrohr- und Hinterrohrkonstruktion aufweist. Dabei ist das Oberrohr und das Hinterrohr über ein in der Regel oben liegendes Gelenk verbunden, wodurch die Winkeleinstellung zwischen und Ober- und Hinterrohr veränderbar ist. Das Oberrohr ist im vorderen Bereich des verbleibenden Dreirad-Rahmens und das Hinterrohr in einem hinteren Bereich des verbleibenden Dreirad-Rahmens abgestützt, und zwar ebenfalls wieder über eine Gelenkverbindung. Zwischen diesen beiden Gelenkverbindungen (also die Gelenkverbindung am vorlaufenden Ende des Oberrohrs bzw. die Gelenkverbindung am nachlaufenden Ende des Hinterrohrs) sind zumindest mittelbar über eine Dreirad-Rahmen-Konstruktion fest miteinander verbunden, die doch mit einer Verstelleinrichtung versehen ist. Dadurch kann der Abstand zwischen den beiden erwähnten Gelenkverbindungen mit unterschiedlicher Größe eingestellt und in dieser Größe fixiert werden. Diese Längenverstelleinrichtung kann auch als Unterrohr oder Unterrohrkonstruktion bezeichnet werden. Dadurch wird in Seitenansicht eine Dreieckskonstruktion geschaffen, deren beide mit Vertikalkomponenten verlaufende Schenkel (Oberrohr und Hinterrohr) in einem Punkt gelenkig miteinander verbunden sind und deren jeweils gegenüberliegenden freien Schenkelenden dann jeweils gelenkig mit dem die Längenverstelleinrichtung bildenden Unterrohr verbunden sind, zumindest mittelbar.

Im Rahmen der Erfindung ist dabei vorgesehen, dass das Unterrohr über eine Längenverstelleinrichtung verfügt. Wird das Unterrohr verlängert und der Abstand zwischen den Drehachsen der Vorderräder und des zumindest einen Hinterrades vergrößert, wird dadurch die Position des Sitzes abgesenkt. Wird die Längserstreckung des Unterrohres wieder verkürzt, wird die Sitzposition am Oberrohr angehoben.

Die Besonderheit ist dabei im Rahmen der Erfindung auch, dass das Oberrohr und das Hinterrohr, die beide gelenkig oben liegend miteinander verbunden sind, und das in Seitenansicht zur dreieckförmigen Lösung führende Unterrohr zwar in Seitenansicht eine dreiecksförmige Geometrie ergeben, in Draufsicht aber quer zur Mittellängsebene des Dreirads versetzt liegen. Mit anderen Worten verläuft das Unterrohr bevorzugt unterhalb des Lastbodens oder des Stauraumes zur Aufnahme von Lasten und Gegenständen, wohingegen das den Sitz tragende Oberrohr und das Hinterrohr gemeinsam seitlich versetzt dazu angeordnet sind. Bevorzugt ist sogar vorgesehen, dass das Hinterrohr auf der einen Seite an der Drehachse des Hinterrades gehalten ist, wohingegen dass erwähnte die Lasten tragende Unterrohr an der gegenüberliegenden Seite des Hinterrades montiert ist. Schließlich ist alternativ oder bevorzugt zusätzlich vorgesehen, dass auch die Lenkstange entsprechend der Sitzposition bzw. bevorzugt entsprechend der Sitzposition individuell um bevorzugt einen Horizontalachse so verstellbar ist, dass deren Lage, d.h. die Lage der Lenkstange in eine bevorzugte Position gebracht werden kann, bezogen auf die jeweilige Sitzposition.

Das erfindungsgemäße Dreirad ist bevorzugt weiterhin so ausgebildet, dass es u.a. einerseits mögliche Kippmomente optimal aufnimmt, andererseits aber auch eine komfortable Einsatzmöglichkeit schafft, um beispielsweise bestimmte Gegenstände, Lasten etc. mitzuführen.

Das Dreirad zeichnet sich bevorzugt dadurch aus, dass neben zwei durch eine Vorderachse miteinander verbundenen Vorderrädern noch ein Hinterrad vorgesehen ist. Das Hinterrad kann grundsätzlich auch durch ein Hinterradpaar ersetzt werden, dessen beiden Räder im Gegensatz zu den beiden Vorderrädern dann mehr oder weniger nebeneinander in einem geringeren oder geringen Abstand zueinander angeordnet sind und somit quasi als einzelnes Hinterrad oder einzelne Hinterradanordnung mit einem Reifenpaar oder einem sogenannten Zwillingsreifen wirkt oder verstanden werden kann, formt jedoch nicht Teil der Erfindung.

Diese Hinterradkonstruktion ist so ausgebildet, dass das Hinterrad nicht in der vertikalen Fahrzeugmittellängsebene angeordnet ist, also nicht mittig zwischen den beiden Vorderrädern, sondern außermittig davon, also asymmetrisch.

Im Rahmen der Erfindung ist also bevorzugt vorgesehen, dass das eine Hinterrad aus der vertikalen Mittellängsebene heraus zu einem der beiden Vorderräder seitlich versetzt angeordnet ist, also der Seitenabstand zwischen dem Hinterrad und einem der Vorderräder deutlich geringer ist als der Seitenabstand zwischen dem Hinterrad und dem anderen Vorderrad.

Dadurch ist es möglich, den Sitz des Dreirads ebenfalls asymmetrisch und damit außermittig zur vertikalen Mittellängsebene anzuordnen.

Dies bietet den weiteren Vorteil, dass auf der Seite des Sitzes, der einen größeren Abstand zum seitlichen Vorderrad aufweist, nunmehr ein Stau- oder Gepäckraum oder dergleichen geschaffen wird, der als Raum zum Transport von weiteren Gegenständen genutzt werden kann.

Der Stauraum kann so ausgebildet sein, dass dort beispielsweise Einhängemöglichkeiten vorgesehen sind, um beispielsweise Kisten, Rucksäcke, Taschen etc. einzuhängen.

Alternativ oder ergänzend kann auch vorgesehen sein, dass in diesem zum Transport von Gegenständen und Gepäck vorgesehenen Stauraum beispielsweise ein Stützboden oder allgemein eine Lagerfläche oder Lagerbereich vorgesehen ist, der beispielsweise brettförmig oder gitterförmig oder z.B. als Aufnahmeschale etc. ausgebildet sein kann. Selbst eine mit einem Deckel versehbare Box kann hier vorgesehen sein, in der Gegenstände untergebracht werden können. Beschränkungen bestehen insoweit nicht.

Bevorzugt kann ein tablettförmiger Stützboden vorgesehen sein, der beispielsweise in Fahrtrichtung und entgegengesetzt dazu einen Begrenzungsrand aufweist, der als Stützrand für Gegenstände dient, die möglicherweise auf dem so gebildeten Stützboden beim Anfahren oder Bremsen des Dreirads leicht in Längsrichtung des Stützbodens verrutschen könnten. An diesen Rändern oder an anderen Stellen des Stützbodens können dann auch Aufnahmeöffnungen oder Verankerungen vorgesehen sein, durch die beispielsweise Gurte hindurchgeführt sind, die zur Sicherung der hierauf angelegten Gegenstände dienen. Vielfältigste Einsatzmöglichkeiten werden dadurch ohne jede Einschränkung gegeben.

Der Stützboden ist dabei bevorzugt an einem Teil des Dreirad-Rahmens mit abgestützt.

Die Sitzanordnung kann, symmetrisch zu der das Hinterrad aufnehmenden vertikalen Hinterradlängsebene vorgesehen sein. In diesem Fall würde dann bevorzugt das frontseitige Tretlager und die daran befestigten Trethebel und Pedale symmetrisch zu dieser vertikalen Hinterradlängsebene angeordnet sein.

Bevorzugt ist jedoch im Rahmen der Erfindung vorgesehen, dass die Sitzanordnung nicht nur asymmetrisch zu vertikalen durch das Dreirad hindurch verlaufenden Mittellängsebene, sondern auch asymmetrisch zur Hinterradlängsebene angeordnet ist, und zwar bevorzugt mit Seitenversatz in die Richtung, die von dem erwähnten Stauraum weggerichtet ist, also von der vertikalen Mittellängssymmetrieebene weg versetzt liegt. Dadurch wird der für den Stauraum bereitgestellte Platz nochmals vergrößert.

Weitere Vorteile, Einzelheiten und Merkmale der Erfindung ergeben sich nachfolgend aus den anhand von Ausführungsbeispielen gezeigten Figuren. Dabei zeigen im Einzelnen:
- Figur 1:: eine räumliche Darstellung des erfindungsgemäßen Dreirads in einer ersten Sitzposition;
- Figur 2a:: eine Seitenansicht des in Figur 1 gezeigten erfindungsgemäßen Dreirads;
- Figur 2b:: eine Seitenansicht von der zu Figur 2a gegenüberliegenden Seite;
- Figur 3:: eine Draufsicht auf das erfindungsgemäße Dreirad gemäß den Figuren 1 bis 2b;
- Figur 4a:: eine rückwärtige Ansicht des erfindungsgemäßen Dreirads;
- Figur 4b:: eine frontseitige Ansicht des erfindungsgemäßen Dreirads;
- Figur 5a:: eine schematische Darstellung der dreieckförmigen Rahmenkonstruktionen zur Erweiterung einer Sitzhöhen-Verstellung, und zwar bei Einstellung der maximalen Sitzhöhe;
- Figur 5b:: eine entsprechende Darstellung zu Figur 5a in abgesenkter Sitzposition, bei der die untere Basis des Dreieckes verlängert ist, und zwar unter gleichzeitiger Absenkung der Sitzhöhe;
- Figur 6:: eine weitere räumliche Darstellung des erfindungsgemäßen Dreirads in einer zu den Figuren 1 bis 4b abweichenden zweiten Sitzposition;
- Figur 7a:: eine Seitenansicht des in Figur 5 gezeigten erfindungsgemäßen Dreirads in der zweiten Sitzposition;
- Figur 7b:: eine entsprechende Darstellung zu Figur 6a, jedoch von der gegenüberliegenden Seite;

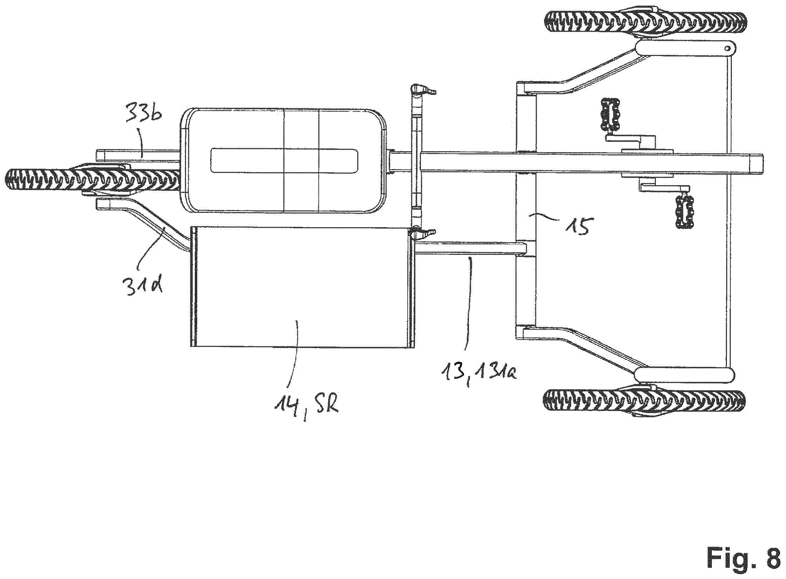

- Figur 8:: eine Draufsicht auf das erfindungsgemäße Dreirad in der zweiten Sitzposition;

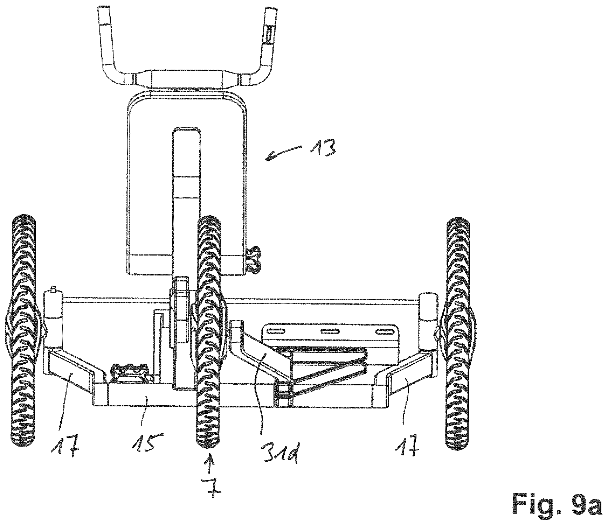

- Figur 9a:: eine Frontansicht des in Figur 5 gezeigten erfindungsgemäßen Dreirads in der zweiten Sitzposition; und

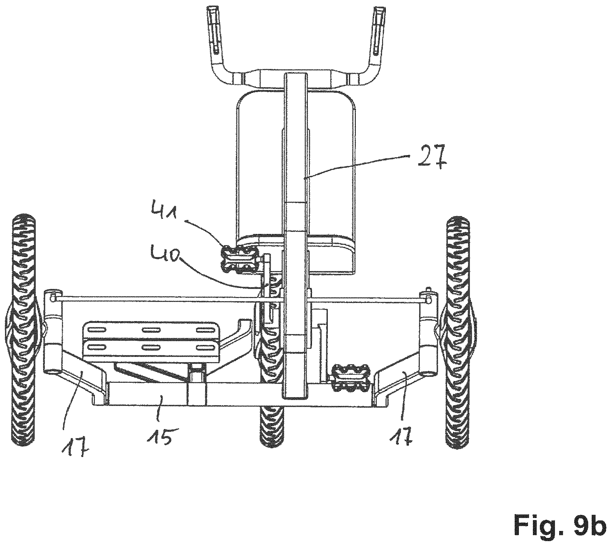

- Figur 9b:: eine rückwärtige Ansicht des erfindungsgemäßen Dreirads in der zweiten Sitzposition.

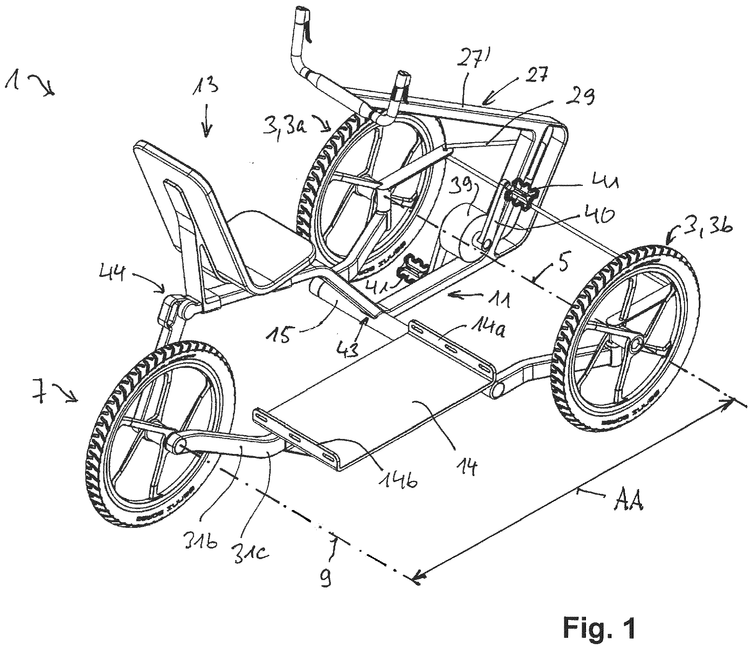

In Figur 1 ist ein grundsätzlicher Aufbau des erfindungsgemäßen Dreirads 1 gezeigt.

Dieses Dreirad 1 umfasst zwei Vorderräder 3, nämlich ein linkes Vorderrad 3a und ein rechts Vorderrad 3b. Diese drehen um eine gedachte Achslinie 5.

Ferner umfasst das Dreirad ein rückwärtiges Rad 7, welches nachfolgend auch kurz als Hinterrad 7 bezeichnet wird, welches um eine gedachte Achslinie 9 dreht.

Anstelle des einzelnen Hinterrades 7 kann grundsätzlich auch ein Hinterradpaar mit zwei in unmittelbarer Nähe nebeneinandersitzenden und um eine gemeinsame Drehachse drehende Hinterräder vorgesehen sein (nach Art eines Zwillings-Rades oder Radpaares), die aufgrund ihres geringen Abstands gegenüber dem Abstand zwischen den beiden Vorderrädern 3, d.h. 3a, 3b quasi wie ein einzelnes oder ein gemeinsames Rad wirken. Dieser Aufbau mit zwei Hinterrädern ist jedoch nicht erfindungsgemäß.

Durch den Abstand zwischen der vorderen Achslinie 5 und der hinteren Achslinie 9 wird der Achsabstand AA des Dreirads gebildet.

Das Dreirad umfasst einen Rahmen 11, über den letztlich das jeweilige Vorderrad 3a bzw. 3b und auch das Hinterrad 7 gehalten sind, und zwar über die Lager derart, dass die Räder möglichst reibungsarm rotieren können.

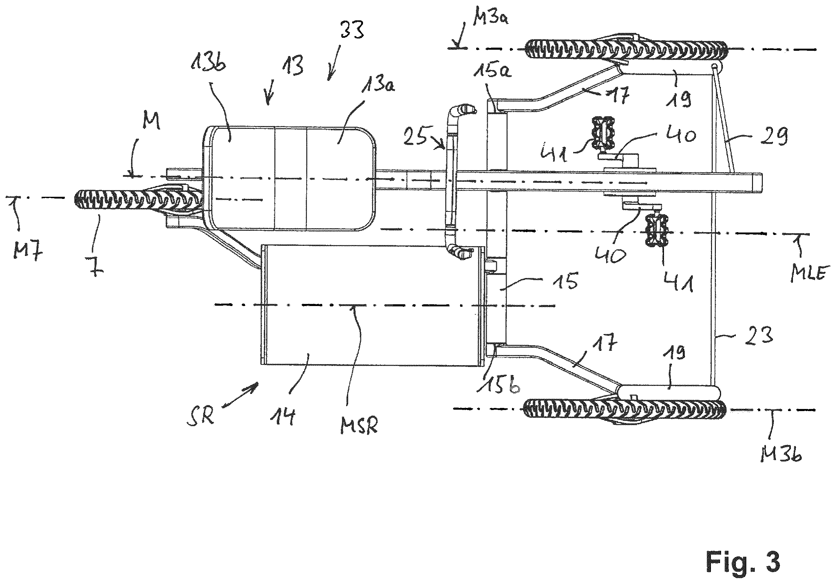

Wie insbesondere aus der Draufsicht gemäß Figur 3 zu ersehen ist, verläuft durch das linke Vorderrad 3a eine vertikale Mittellängsebene M3a, wohingegen eine vertikale Mittellängsebene M3b durch das rechte Vorderrad 3b verläuft, die beiden Mittellängsebenen M3a und M3b verlaufen stets parallel zueinander und bei gerader Ausfahrt auch parallel zu den anderen nachfolgend noch definierten in Figur 3 senkrecht zur Zeichenebene verlaufenden Längsebenen. Dies gilt insbesondere auch für die sogenannte Mittellängsebene MLE, die mittig zwischen den beiden Vorderrädern 3a und 3b verläuft und bei gerader Ausfahrt parallel zu den Radebenen M3a und M3b ausgerichtet ist.

Durch das Hinterrad 7 ist eine vertikale Mittellängsebene M7 definiert.

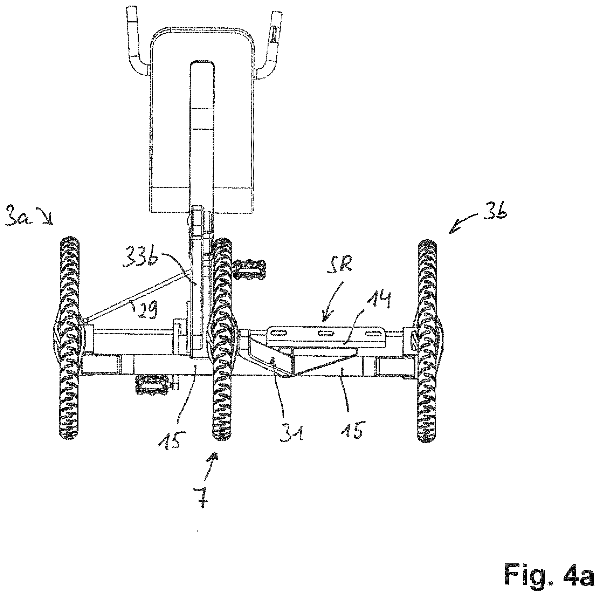

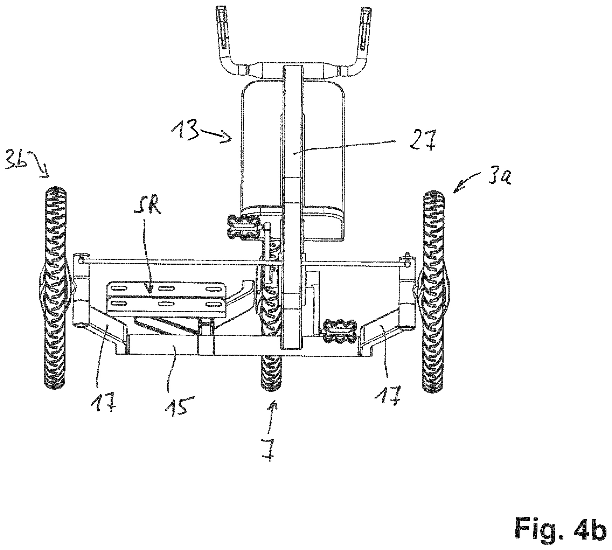

Durch diese grundsätzliche ein bestimmtes Prinzip wiederspiegelnde Konstruktion ergeben sich wesentliche erfindungsgemäße Vorteile. Denn wie aus den diversen Darstellungen gemäß der Figuren 1 bis 4 zu ersehen ist, wird dadurch sichergestellt, dass der Sitz asymmetrisch zur Mittellängsebene MLE angeordnet ist. Dadurch wird auf der zur Mittellängsebene MLE gegenüberliegenden Seite (das heißt gegenüberliegend zum Sitz 13) ein Raum oder Stauraum SR gebildet, in dem zusätzliche zu transportierende Gegenstände oder Lasten untergebracht oder aufgenommen werden können.

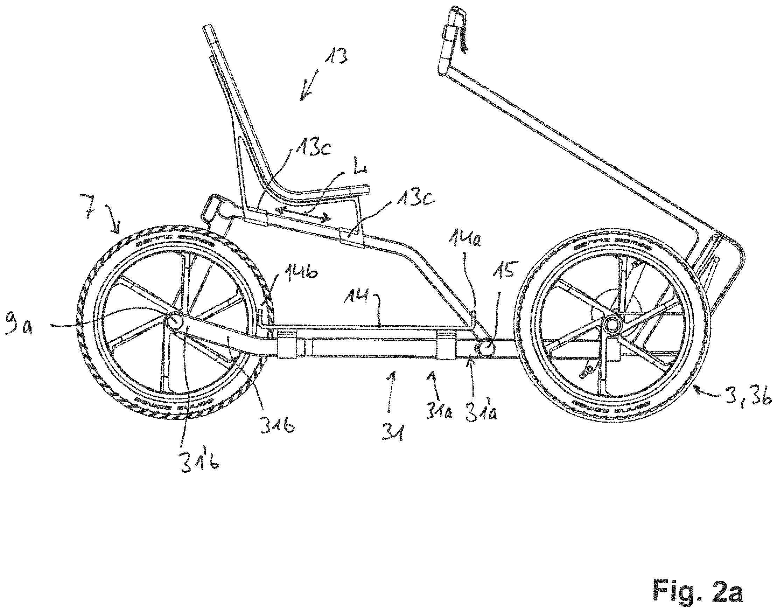

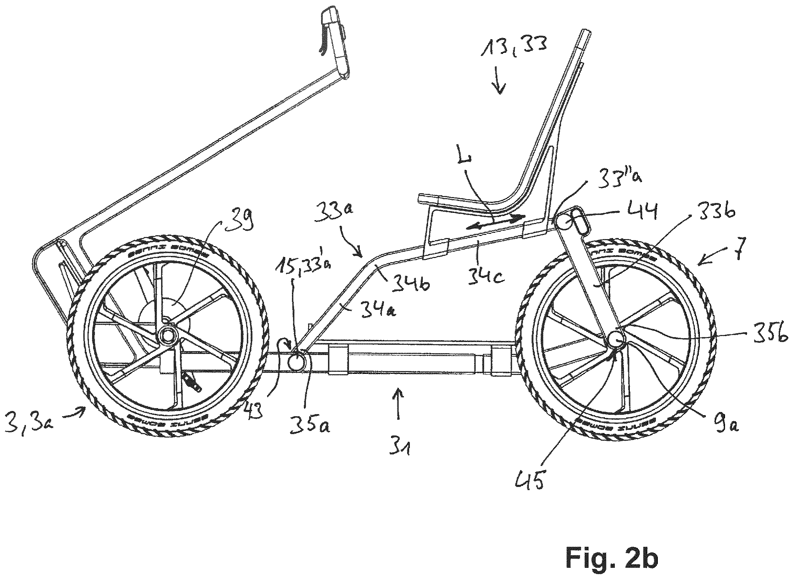

Im gezeigten Ausführungsbeispiel ist dazu ein Boden, eine Bodenfläche, oder ein Bodenbereich oder Lastenboden 14 oder dergleichen vorgesehen, der beispielsweise über eine vorlaufende Verankerungsstelle 114a und eine nachlaufende Befestigungsstelle 114b (siehe Figur 2a und 2b) an einem später noch erörterten Lastenträger 31 verankert werden kann, vorzugsweise in geringem Abstand darüber. Es kann sich dabei beispielsweise in einem in Draufsicht zumindest rechteckförmig ausgebildeten oder angenäherten Lastenboden handeln, der aus unterschiedlichsten Materialien gebildet sein und zudem die unterschiedlichsten Formen aufweisen kann, beispielsweise auch gitterförmig gestaltet sein kann. Beschränkungen bestehen insoweit nicht. Ergänzend und anstelle dieses Lastenbodens 14 könnten auch Haken-Einrichtungen oder dergleichen vorgesehen sein, um hier bestimmte Lasten anzubringen. Beim derartigen gebildeten Lastenboden können darauf beispielsweise beliebige Gepäckstücke, aber auch Getränkekästen abgestellt und mit dem Dreirad transportiert werden. Ferner kann in diesem so gebildeten Stauraum SR beispielsweise am Lastenboden 14 oder an anderen Befestigungs- oder Einhängeeinrichtungen noch weitere Fixiereinrichtungen vorgesehen sein, um in diesem Stauraum SR zu transportierende Gegenstände gegen ein Verlieren und Verrutschen zu sichern. So verfügt beispielsweise der in den Zeichnungen dargestellte Lastenboden 14 über einen vor- und einen nachlaufenden Begrenzungssteg 14a bis 14b der helfen soll, dass Gegenstände beim Anfahren oder Bremsen nicht in Längsrichtung verrutschen. Auch dort können noch Löcher, Durchbrechungen oder andere Befestigungsmittel vorgesehen sein, um beispielsweise Gurte und dergleichen um die zu transportierenden Gegenstände herumzulegen und zu sichern. Somit ergibt sich also ein Grundprinzip der bevorzugten Lösung, bei der beispielsweise in Fahrtrichtung betrachteten (insbesondere beispielsweise bei Draufsicht gemäß Figur 3) der Sitz 13 völlig oder überwiegend, also zu mehr als 75 %, 80 %, 85 %, 90 %, 95 % oder zu 100 % seiner Breite seitlich von der Mittellängsebene MLE angeordnet ist, wohingegen der Stauraum SR beispielsweise präsentiert durch den Lastenboden 14 bevorzugt ganz oder zu einem wesentlichen Teil von mehr als 75 %, 80 %, 85 %, 90 %, 95 %, oder eben zu 100 % auf der gegenüberliegenden Seite der Mittellängseben MLE vorgesehen und ausgebildet ist.

Gemäß der Draufsicht nach Figur 3 ist dabei auch zu ersehen, dass die durch den Sitz mittig verlaufende Mittelebene M nicht mit der vertikalen Mittelebene M7 zusammenfällt, welche mittig durch das Hinterrad 7 verläuft. Denn die gewählte Konstruktion ist derart, dass der Sitz und damit seine vertikale Mittelebene M gegenüber der durch das Hinterrad 7 verlaufenden vertikalen Mittelebene M7 seitlich versetzt ist, nämlich nicht auf den Stauraum zu, sondern quer zur Mittellängsebene MLE Stauraum weggerichtet. Mit anderen Worten ist also der Sitz 13 und damit dessen vertikale Mittellängsebene M in Richtung jenes Vorderrades 3a seitlich versetzt, dessen Vorderrad-Mittellängsebene M3a zu der Mittellängsebene M7 durch das Hinterrad einen kleineren Abstand aufweist als der Abstand zwischen dieser vertikalen Mittellängsebene M7 durch das Hinterrad 7 und dem gegenüberliegenden Vorderrad 3b. Mit anderen Worten ist der Sitz mit der Mittellängsebene MLE in der gleichen Richtung seitlich versetzt liegend angeordnet, in welcher auch das Hinterrad 7 gegenüber der Mittellängsebene seitlich versetzt ist, der Stauraum SR liegt dem gegenüber zu dem Hinterrad 7 und ganz oder überwiegend zum Sitz 13 auf der zur Mittellängsebene MLE gegenüberliegenden Seite, die insbesondere aus der Draufsicht gemäß Figur 3 zu ersehen ist. Da also das Hinterrad 7 quasi asymmetrisch zwischen der Mitte des Stauraums SR und der Mitte des Sitzes 13 angeordnet ist, nämlich sehr viel näher zu der durch den Sitz 13 verlaufenden Mittellängsebene M liegt und damit entfernter zu dem Stauraum SR, wird grundsätzlich durch diese Konstruktion gleichwohl eine optimale Ausbalancierung der Gewichtsverteilung realisiert. Legt man wie in Figur 3 eingezeichnet ist eine durch den Stauraum SR mittig und in Längsrichtung verlaufende vertikale Mittelebene SR, so ergibt sich, dass die Größe des Seitenversatzes zwischen der durch das Hinterrad 7 verlaufenden vertikalen Mittelebene M7 und der durch den Stauraum SR verlaufenden vertikalen Mittelebene MSR bevorzugt zumindest 1,5 mal, vorzugsweise zumindest 1,75, 2,0, 2,25, 2,5, 3,0, 3,25, 3,5, 3,75, 4,0, 4,25 oder zumindest 4,5 mal so groß ist wie der seitliche Abstand zwischen der durch das Hinterrad 7 verlaufenden vertikalen Mittelebene M7 und der durch den Sitz 13 verlaufenden Mittelebene M, die letztlich auch durch das Tretlagergehäuse 39 mittig verläuft.

Schließlich wird auf die Mittellängsebene MLE verwiesen, die mittig durch das Dreirad hindurch verläuft, das heißt mit Vertikalausrichtung in der Mitte zwischen dem Radabstand der beiden Vorderräder 3, also der beiden Vorderräder 3a und 3b. Diese vertikale Mittellängsebene MLE ist in Figur 3 strichpunktiert eingezeichnet.

Wie aus der Darstellung gemäß Figur 1, den Seitenansichten gemäß Figur 2a und 2b, aber beispielsweise auch der Draufsicht gemäß Figur 3 zu ersehen ist, kann der am Rahmen 11 befestigte Sitz 13 beispielsweise eine Sitzfläche 13a und eine demgegenüber nach oben verlaufende Rückenlehne 13b aufweisen.

Aus den Zeichnungen ist auch der weitere Aufbau des Rahmens 11 zu ersehen, der nachfolgend teilweise auch als Rahmenkonstruktion oder Chassis 11 bezeichnet wird.

Obgleich dieser Rahmen 11 sehr unterschiedlich umgesetzt werden kann, ist bei dem Rahmen des erfindungsgemäßen Dreirads bevorzugt vorgesehen, dass er als zentrales Element einen Querträger 15 umfasst, an dessen gegenüberliegenden Seitenenden 15a jeweils mit überwiegend nach vorne gerichteter Komponente (also in Längsrichtung) leicht nach außen divergierend verlaufende Frontträger 17 vorgesehen sind, die zu sogenannten Radträgern 19 führen. Die beiden Radträger 19, von denen der eine dem linken und der andere dem rechten Rad 3a, 3b zugeordnet ist, und die dabei jeweils auf der Innenseite des zugeordneten Rades angeordnet sind, sind jeweils gemeinsam um eine bevorzugt vertikale Lenkachse 21 bei der Darstellung gemäß Figur 3 nach links bzw. nach rechts verschwenkbar, um das Dreirad nach links bzw. nach rechts in eine Kurvenfahrt bringen zu können.

Die beiden Radträger 19 sind dabei bevorzugt an einem vorlaufenden Ende oder dem vorlaufenden Ende näherliegend über eine quer zur Mittellängsebene MLE verlaufenden Koppelstange 23 miteinander verbunden.

Dadurch wird es letztlich ermöglicht, dass durch Verdrehung des Lenkers 25 nach links oder rechts die entsprechende Drehbewegung eines mit dem Lenker 25 drehfest verbundenen Lenkerrohrs 27 über eine nicht näher gezeigte Triebverbindung eine Lenkerhebelverbindungstange 29 entweder nach links oder nach rechts überwiegend längsverschieblich verstellt wird. Da diese Lenkerhebelverbindungsstange 29 an ihrem außenliegenden Ende bei der Draufsicht gemäß Figur 3 mit zumindest einem Radträger 19 verbunden und dieser Radträger zudem über die erwähnte Koppelstange 23 mit dem gegenüberliegenden Radträger verbunden ist, führt eine Längsverstellung der Lenkerhebelverbindungsstange 29 dazu, dass beide Vorderräder 3a nach links oder nach rechts verschwenkt werden können, und zwar in Abhängigkeit einer Links- bzw. Rechtsdrehung des Lenkers 25. In den Figuren ist dabei das Lenkrohr 27 selbst nicht direkt gezeigt, sondern verläuft in einem Lenkergehäuse 27', welches selbst nicht nach links oder rechts verdreht werden kann, sondern im Inneren die mit dem Lenker 25 verlaufende Lenkerstange aufnimmt und lagert.

Aus den Zeichnungen ist letztlich auch ersichtlich, dass von dem erwähnten Querträger 15 ein zur Hinterradachse 9 führender Lastenträger 31 (nachfolgend auch Lastenholm 31 genannt) vorgesehen und an seinen gegenüberliegenden Enden entsprechend verankert bzw. abgestützt ist.

Der erwähnte Lastenträger 31 ist an seinem vorlaufenden Ende 31'a an dem Querträger oder Querholm 15 fest verankert. Er ist dort um die Längsrichtung des Querholms 15 nicht verschwenkbar. Das nachlaufende Ende 31'b des Lastenträgers 31 ist an der Hinterradachse 9a verankert und darüber gehalten. Dabei verläuft ein vorlaufender Abschnitt des Lastenträgers 31 in horizontaler Ausrichtung bevorzugt in gleicher Höhe, in der auch der Querträger oder Querholm 15 positioniert ist. Über die in Längsrichtung und damit parallel zur Mittellängsebene MLE verlaufende Ausrichtung des Lastenträgers 31 kann dann auch beispielsweise die Tragkonstruktion für Lasten in dem Stauraum SR abgestützt werden, beispielsweise in Form des erwähnten Lastbodens, der Lastfläche oder des Lastbereiches 14.

Wie aus den Zeichnungen zu ersehen ist, ist der Lastenträger 31 in einen vorlaufenden Lastenträgerabstand 31a und in einen nachlaufenden Lastenträgerabschnitt 31b gegliedert. Der erwähnte vorlaufende Lastenträgerabschnitt 31a geht dabei in einen nachlaufenden Lastenträgerabschnitt 31b über, der letztlich einen Krümmungsabschnitt 31c umfasst, um den sich ein in Richtung Hinterradachse verlaufender Winkelabschnitt 31d anschließt. Der erwähnte Winkelabschnitt 31d verläuft dabei nicht winklig in Richtung Hinterradachse 9a, sondern ist auch noch mit einer leicht ansteigenden Komponente versehen, da sein nachlaufendes Ende 31'b in Höhe der Hinterradachse 9 verankert ist, und diese Verankerungsstelle höher liegt als der vorlaufende Lastenträgerabschnitt 31a.

Da der Lastenträger 31 unterhalb der Lastfläche 14 im Wesentlichen parallel zur Mittellängsebene verläuft, allerdings außermittig zu der zu den Stauraum SR mittig verlaufenden Mittelstauraumebene MSR, sind bevorzugt an dem Lastenträger 31 noch quer vorstehende Lastenträger-Winkel 141 angebracht, beispielsweise angeschweißt, um die Lagerfläche oder den Lastenboden 14 optimal abzustützen.

Insbesondere gemäß der Draufsicht nach Figur 3 ist zu ersehen, dass im Wesentlichen parallel zum Lastenträger 31 seitlich versetzt liegend die Sitzträgeranordnung 33 vorgesehen ist, die von einer vorlaufenden Abstützstelle 35a ausgeht und am gegenüberliegenden nachlaufenden Ende an einer Abstützstelle 35b abgestützt ist, an die bevorzugt die Hinterradachse 9a gebildet ist.

Diese Sitzträgeranordnung 33 umfasst ausgehend vom Querträger 15 - wenn man von der Terminologie eines Fahrradrahmens ausgeht - ein Oberrohr 33a, welches an seinem vorlaufenden Ende 33'a an dem erwähnten Querträger 15 an der Abstützstelle 35a abgestützt ist und welches an seinem nachlaufenden Ende 33"a in ein Hinterrohr 33b übergeht, welches dann wiederum wie erwähnt an der Hinterradachse 9a abgestützt ist.

Im gezeigten Ausführungsbeispiel verläuft dabei vom vorlaufenden Ende 33'a ausgehend das Oberrohr 33a zunächst in einem ersten Oberrohrabschnitt 34a mit stärkerer Vertikalkomponente, um dann an einem Übergangsbereich 34b in einen zweiten Oberrohrabschnitt 34c überzugehen, dessen Ausrichtung in Seitendarstellung derart ist, dass dessen Horizontal- oder Längserstreckung deutlich größer ist als die Vertikalerstreckung und somit auch der Vertikalanstieg zu seinem rücklaufenden Ende 33"a geringer ausfällt

Grundsätzlich könnte diese so gebildete Sitzträgeranordnung 33 am vor- und am nachlaufenden Ende sowie am Übergang vom Oberrohr 33a zum Hinterrohr 33b starr ausgebildet sein.

Auch in einem derartigen Fall könnte beispielsweise der Sitz 13 auf dem Oberrohr 33a, d.h. im gezeigten Ausführungsbeispiel zumindest im zweiten Oberrohrabschnitt 34c in Längsrichtung L verstellt werden, wie dies mittels der Pfeildarstellung L in Figur 2a angedeutet ist. Denn ein vorlaufender und ein nachlaufender Sitzhalteabschnitt 13c, welcher in geeigneter Weise an dem Oberrohr 33a fest verankert und verankerbar ist, können in diesem Bereich längs verschoben werden und in der gewünschten Stellung durch nicht näher gezeigte Fixiereinrichtungen (beispielsweise mit Exzenter) gehalten werden. Der Hebel zur Fixierung einer Sattelstütze an einem Fahrrad kann in einer optimalen Position verankert werden. Dadurch kann der Abstand zu den im Bereich der Vorderradachse 5 axial dazu angeordneten Tretlagergehäusen 39 mit dem davon ausgehenden beiden Pedalhebeln 40 und den daran angebrachten Pedalen 41 verändert werden.

Im gezeigten Ausführungsbeispiel ist jedoch das vorlaufende Ende 33'a des Oberrohrs 33a an dem Querträger 15 mittels eines dort vorgesehenen ersten Gelenkes 43 zumindest in einem ausreichenden nachfolgend erörterten Winkelbereich um eine längs zum Querträger 15 verlaufend und damit parallel zur Achslinie 5 oder 9 ausgerichteten Verschwenkachse verschwenkbar. Ferner ist das nachlaufende Ende 33"a des Oberrohrs 33a über ein zweites Gelenk 44 mit dem einen Ende des Hinterrohrs 33b verbunden, welches wiederum über ein drittes Gelenk 45 zumindest mittelbar mit der die Sitzträgeranordnung 33 tragenden Hinterradachse 9a verbindet.

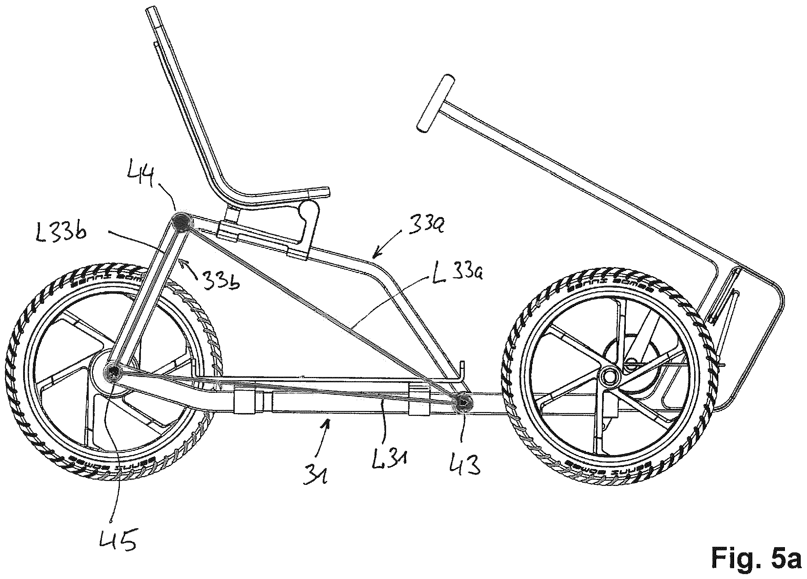

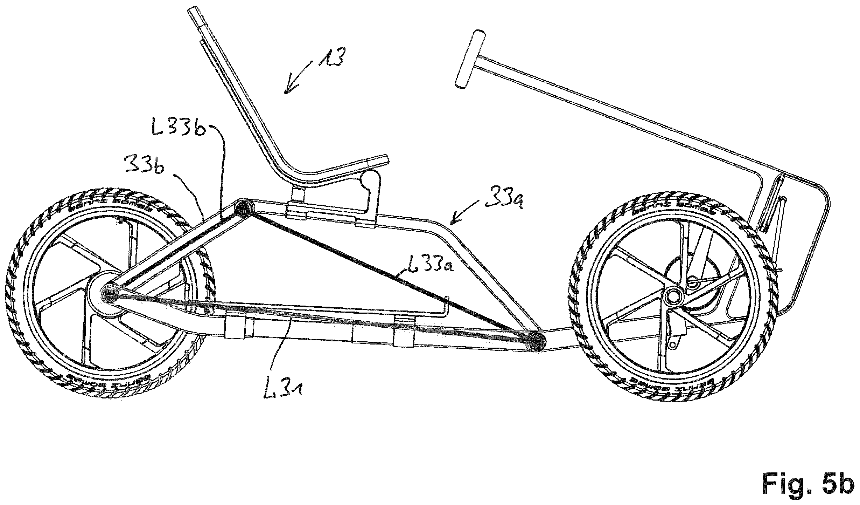

Durch diese Anordnung ergibt sich grundsätzlich eine MehrPunkt-Anordnung, im gezeigten Ausführungsbeispiel eine Dreiecksanordnung mit drei Gelenkstellen, wodurch in Seitenansicht gemäß Figur 5a und 5b der Rahmen 11 letztlich veränderbar ist.

Gemäß der Darstellung nach Figur 5a sind die Abstände zwischen den drei Gelenken 43, 44, 45 als Linien L33a, L33b bzw. L31 dargestellt, unabhängig davon, dass beispielsweise das Oberrohr 33a zwei winklig zueinander ausgerichtete Abschnitte 34a, 34c umfasst, die über den erwähnten Übergangsbereich 34b miteinander verbunden sind.

Im Rahmen des erfindungsgemäßen Dreirads ist nämlich vorgesehen, dass das durch die Verbindungslinie L31 vereinfacht dargestellte Lastenträger 31, welches auch als Unterrohr 31 bezeichnet wird, eine Einrichtung aufweist, um in seiner Länge verändert werden zu können.

Abstrakt gesprochen kann dieser Lastenträger 31 bzw. das Unterrohr 31 in seiner Länge beispielsweise von der minimalen Längserstreckung gemäß Figur 5a bis in seine maximale Längserstreckung gemäß Figur 5b kontinuierlich in Schritten oder auch nur zwischen den beiden End- oder Extremstellungen verändert werden. Wenn in diesem Zusammenhang der Abstand zwischen der vorderen Achslinie 5 und der durch die Hinterradachse verlaufenden Hinterradachslinie 9 gebildete und in Längsrichtung verlaufende Achsabstand AA vergrößert wird, führt dies dazu, dass die beiden weiteren Schenkel des Dreiecks, nämlich das sogenannte Oberrohr 33a und das Hinterrohr 33b (also die Verbindungslinien L33a und L33b in Figur 5a bzw. 5b) in ihrer Winkellage zueinander weiter geöffnet werden, so dass somit das zweite Gelenk 44 und damit das den Sitz 13 tragende Oberrohr 33a weiter nach unten abgesenkt wird. Dadurch nimmt auch der Sitz 13 eine tiefere Lage ein. Die Ausrichtung der den Lenker tragenden Lenkeinrichtung kann dabei ebenfalls um eine nicht näher gezeigte horizontale Querachse verschwenkt und in eine optimale Lage gebracht und in dieser Lage fixiert werden.

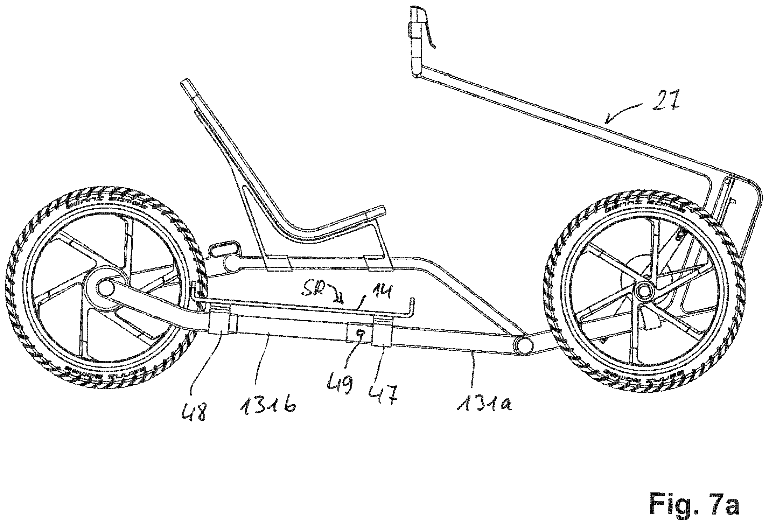

Da eine derartige Rahmenveränderung beispielsweise von Figur 2a hin zu Figur 7a entsprechend der abstrakten Darstellung gemäß Figur 5a und 5b zu einer Vergrößerung des Achsabstandes AA führt, fordert dies zwangsläufig, dass dann bzgl. der zweiten Verbindung zwischen dem vorderen Querträger 15 und der Hinterradachse in Form des Lastenträgers 31 (auch Unterrohr 31 genannt) ebenfalls eine derartige Änderung des Achsabstandes AA vorgenommen wird. Dies erfolgt durch eine Längenänderungseinrichtung, die an diesem Lastenträger 31 ausgebildet ist.

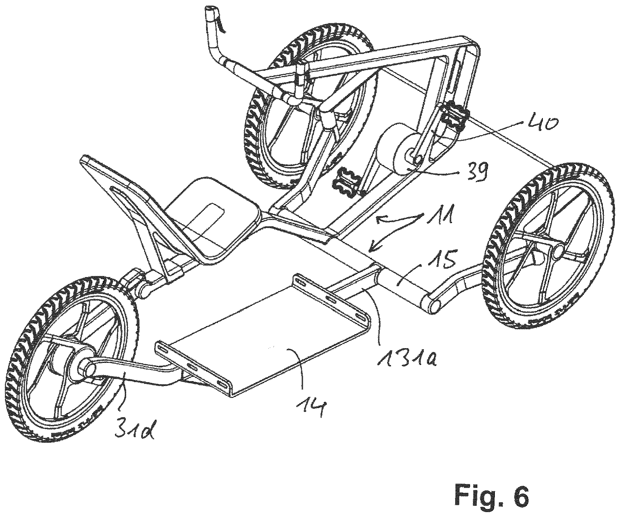

Diese Rahmenverstellung ist anhand der nachfolgenden Figuren 6ff näher dargestellt.

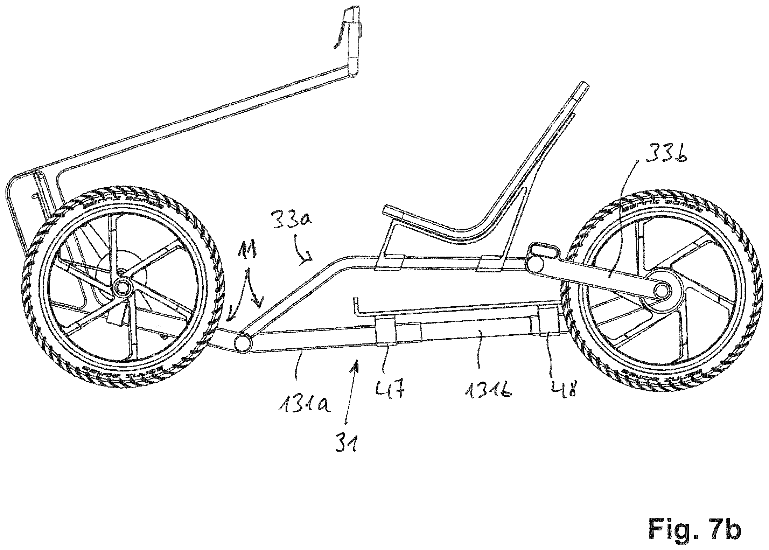

Aus den Seitendarstellungen gemäß Figur 5a, 5b, 7a und 7b ist zu ersehen, dass beispielsweise zur Erzeugung einer Längenänderung des Unterrohres 31 dieses Unterrohr 31 einen zur Hinterradachse 9a führenden Unterrohrabschnitt 131b aufweist, welcher mit seinem im gezeigten Ausführungsbeispiel gerade ausgebildeten verlaufenden Abschnitt in eine entsprechende Aufnahme eines vorderen Unterrohrabschnitts 131a eingreift und darin teleskopartig längsverstellbar ist. Ob es sich dabei um einen Rohreingriff handelt ist von sekundärer Bedeutung. Wichtig ist, dass die beiden Unterrohrabschnitte 131a, 131b relativ zueinander längsverschieblich sind und dabei unverlierbar ineinander oder aneinander so geführt sind, dass sie nicht außer Eingriff geraten können und sich andererseits auch bei maximaler Längserstreckung in einem ausreichenden Maß überdecken, so dass beide Hinterrohrabschnitte 131a, 131b das zu tragende Gewicht aufnehmen können.

Da in dieser Unterrohrkonstruktion gleichzeitig auch die den Stauraum bildende Stauraumkonstruktion verankert ist, beispielsweise in Form eines Stütz- oder Lastbodens, ist dieser Stütz- oder Lastboden 14 an seinem vorlaufenden Ende beispielsweise an einem Abschnitt des nachlaufenden Unterrohrabschnitts 131a an einer Abstützstelle 47 und sein nachlaufendes Ende an einer weiteren Abstützstelle 48 an dem teleskopierbaren weiteren Unterrohrabschnitts 133b abgestützt ist, dazu allerdings längsverschieblich und nicht fest.

Dadurch kann die Rahmenkonstruktion beispielsweise von der in Figur 2a gezeigten kürzeren Längserstreckung in die in Figur 7a gezeigte größere Längserstreckung (also von der Stellung gemäß Figur 5a in die Stellung gemäß Figur 5b) geändert werden, bei welcher der Achsabstand AA vergrößert und gleichzeitig dies Sitzträgeranordnung 33 mit dem darauf befindlichen Sitz 13 in eine tiefere Lage gebracht wird, wie aus den Darstellungen ersichtlich ist.

Die beiden ineinander teleskopierbaren Unterrohrabschnitte 133a, 133b können mittels einer in den Zeichnungen nur abstrakt wiedergegebenen Fixiereinrichtung 49 unverschieblich zueinander fixiert werden, um die jeweilige gewünschte Sitzposition zu fixieren.

Die Verstellung zwischen einer angehobenen Sitzposition und einer abgesenkten Sitzposition ist so durchführbar, dass beispielsweise eine Verstellung nur zwischen diesen beiden Extremstellungen möglich ist. Es kann aber auch vorgesehen sein, dass dazwischen noch ein oder mehrere Zwischenpositionen eingestellt werden können. Dabei ist vorzugsweise für die Sitzträgeranordnung mit den gelenkig miteinander verbundenen Rohrabschnitten noch eine Fixiereinrichtung vorgesehen. Eine dieser Fixiereinrichtungen kann beispielsweise im Bereich des Gelenks 44 zwischen dem Oberrohr 33a und dem Hinterrohr 33b vorgesehen sein. Eine weitere Fixiereinrichtung ist im Bereich des Gelenks 45 vorgesehen, nämlich am nachlaufenden Ende des Hinterrohrs 33b gegenüber dem Gelenk 45 am Hinterrad 7. Diese Fixiereinrichtungen können formschlüssig ausgebildet sein und dabei z.B. Anschlagsbegrenzungen insbesondere für die abgesenkte Sitzposition aufweisen, so dass ein weiteres Absenken über diese formschlüssige oder anschlagsbedingte Endposition nicht möglich ist. Die erwähnte Fixiereinrichtung 49 für die teleskopierbaren Unterrohrabschnitte 133a und 133b können ebenfalls formschlüssig ausgebildet sein. Alle diese erwähnten bevorzugt formschlüssig ausgebildeten Fixiereinrichtungen können genauso aber auch kraftschlüssig oder form- und kraftschlüssig ausgebildet und realisiert sein. Dazu gleichwirkende Arretier- und Fixiereinrichtungen sind möglich und denkbar, um insbesondere die Sitzposition in der gewünschten Lage zu halten und die hierüber in den Rahmen eingeleiteten Kräfte aufzunehmen und abzustützen.

Dabei wird angemerkt, dass jede Längsverstellung des Rahmens 11 und damit jede gewünschte Sitzposition eingestellt und in dieser Position fixiert werden kann, die zwischen der maximalen Längserstreckung und der minimalen Längserstreckung der teleskopierbaren Unterrohrabschnitte 133a, 133b möglich ist dabei kann die Fixierung gegebenenfalls kontinuierlich an beliebiger Stelle zwischen den beiden teleskopierbaren oder teleskopähnlich verstellbaren Unterrohrabschnitten 133a und 133b vorgenommen werden, gegebenenfalls aber auch derart, dass diese beiden zusammenwirkenden Unterrohrabschnitte nur in bestimmten diskreten Schritten fest aneinander fixierbar sind.

Entsprechend dieser Längenänderung der Unterrohrabschnitte 133a und 133b wird also nicht nur der Achsabstand AA vergrößert oder verringert, sondern in Abhängigkeit davon auch die Sitzhöhe angehoben oder abgesenkt, da entsprechendes durch die Stellung der beiden Unterrohrabschnitte 133a und 133b vorgegebener Achsabstand dann letztlich die Winkeleinstellung zwischen dem Oberrohr 30a und dem Hinterrohr 33b ändert und damit die Sitzhöhe zwangsweise mit einer entsprechenden Lageveränderung durchführt.

Damit eine derartige Achsabstandsänderung verbunden mit einer Absenkung oder Anhebung der Sitzposition optimal durchgeführt werden kann, ist die Gesamtanordnung - wie sich schon ergeben hat - in Draufsicht derart gestaltet, dass die Längenverstelleinrichtung für den Lastenträger 31 parallel zur Mittellängsebene MLE verläuft und auch das Oberrohr 33a und das Hinterrohr 33b in Draufsicht parallel zur Mittellängsebene MLE angeordnet sind, sodass die erwähnten Gelenkachsen 43, 44, 45 jeweils senkrecht zur Mittellängsebene ausgerichtet sind. Dadurch gibt es zwei Verbindungseinrichtungen zwischen dem Querträger 15 und der rückwärtigen Hinterradachse 9a, die in ihrem Verstellbereich parallel zur Mittellängsebene verlaufen.

Dabei ist das Hinterrad 7 derart angeordnet zu liegen, dass die Sitzträgeranordnung 33 mit Ober- und Hinterrohr 33a, 33b auf der einen Seite des Hinterrades an der zugehörigen Hinterradachse 9a abgestützt ist, wohingegen der Lastenträger 31, der vorzugsweise zumindest mit einem Längsverstellbereich auf der anderen Seite zur Mittellängsebene MLE verläuft, an der gegenüberliegenden Seite des Rades an der Hinterradachse 9a abgestützt ist. Wie bereits erwähnt wurde, ist eine nicht näher gezeigte Verstell- und Fixiereinrichtung im Bereich der vorderen Abstützung des Lenkstangengehäuses vorgesehen, sodass in Abhängigkeit der Sitzposition die Höhe des Lenkers mit verstellt und in der optimalen Höhe fixiert werden kann. Auch in abgesenkter Position beispielsweise gemäß der Darstellung nach Figur 7a oder 7b kann zusätzlich noch eine Lageveränderung des Sitzes wie bereits beschrieben durch Längsverschiebungen auf den Oberrohr durchgeführt werden, um auch den Abstand zu den Pedalen optimal einstellen zu können.

## Patentansprüche

1. Dreirad, mit folgenden Merkmalen:
- mit zwei gemeinsam lenkbaren Vorderrädern (3; 3a, 3b), die zu einer durch das Dreirad verlaufenden vertikalen Mittellängsebene (MLE) symmetrisch angeordnet und um eine gemeinsame Vorderrad-Achslinie (5) drehbar sind,
- mit einem Hinterrad (7), welches um eine Hinterrad-Achslinie (9) drehbar ist,
- mit einem Sitz (13),
- dass ferner eine Höhenverstelleinrichtung für den Sitz (13) vorgesehen ist,
- die Höhenverstelleinrichtung (13) umfasst eine Längenverstelleinrichtung, durch die der Achsabstand zwischen der durch die Vorderräder (3; 3a; 3b) bei geradeausfahrt verlaufenden gemeinsamen Achslinien und der durch das vorzugsweise nicht lenkbare Hinterrad (7) verlaufende Achslinie (9) in der Größe veränderbar ist und in der jeweiligen Achsabstands-Lage fixierbar ist, **dadurch gekennzeichnet, dass** das eine Hinterrad außermittig zu der Mittellängsebene (MLE) und asymmetrisch angeordnet ist und der Sitz außermittig und damit asymmetrisch zur Millellängsebene angeordnet oder zumindest zu 75% angeordnet ist, auf der gleichen Seite gegenüber der Mittellängsebene liegend, auf der auch das Hinterrad außermittig angeordnet ist.

2. Dreirad nach Anspruch 1, **dadurch gekennzeichnet, dass** der Dreirad-Rahmen (11) eine Sitzträgeranordnung (33) aufweist, die ein Oberrohr (33a) umfasst, welches über ein Hinterrohr (33b) am Dreirad-Rahmen (11) vorzugsweise in Form eines die Vorderräder (3) zumindest mittelbar tragenden Querträgers (15) und/oder an der Hinterradachse (9a) abgestützt ist.

3. Dreirad nach Anspruch 2, **dadurch gekennzeichnet, dass** das Oberrohr (33a) im vorlaufenden Bereich am Querträger (15) und/oder an den beiden Vorderradachsen (5a) der beiden Vorderräder (3) zumindest mittelbar abgestützt ist.

4. Dreirad nach Anspruch 2 oder 3, **dadurch gekennzeichnet, dass** das Oberrohr (33a) zumindest mittelbar an dem einen Teil des Dreirad-Rahmens (11) bildenden Unterrohrs oder Lastenträgers (31) bevorzugt über den Querträger (15) abgestützt ist, und dass die Abstützung des Oberrohrs (33a) zumindest mittelbar am Unterrohr (31) mittels eines ersten Gelenkes (43a) und die Abstützung des Hinterrohrs (33b) am Unterrohr (31), dem verbleibenden Teil des Dreirad-Rahmens (11) und/oder an der Hinterradachse (9a) über eine zweite Gelenkeinrichtung (34b) abgestützt ist, wobei die an der Verbindungsstelle zwischen dem Oberrohr (33a) und dem Hinterrohr (33b) durch eine dritte Gelenkverbindung (45a) gebildet ist.

5. Dreirad nach Anspruch 4, **dadurch gekennzeichnet, dass** das Unterrohr (31) mit einer Längenveränderungseinrichtung ausgestattet ist, wodurch der Abstand zwischen dem vorlaufenden Gelenk (43) und dem nachlaufenden Gelenk (45) in seiner Länge veränderlich und in der voreingestellten Länge fixierbar ist, wodurch die Höhenlage des Sitzes (13) veränderbar ist.

6. Dreirad nach Anspruch 4 oder 5, **dadurch gekennzeichnet, dass** das Unterrohr (31) teleskopartig ineinander bzw. auseinander längenveränderlich verstellbar und fixierbar ist.

7. Dreirad nach Anspruch 6, **dadurch gekennzeichnet, dass** das Unterrohr (31) oder der Lastenträger (31) einen vorlaufenden Unterrohrabschnitt (131a) und einen dazu nachlaufenden Unterrohrabschnitt (131b) aufweist, wobei der vorlaufende Unterrohrabschnitt (131a) zumindest mittelbar über die Vorderradachsen (3') und der nachlaufende Unterrohrabschnitt (131b) an seinem nachlaufenden Ende zumindest mittelbar an der Hinterradachse (9') abgestützt ist, wobei der Lastboden (14) zumindest über zwei Befestigungseinrichtungen (114a, 114b) zum einen an dem vorlaufenden Unterrohrabschnitt (131a) und zum anderen über den dazu nachlaufenden Unterrohrabschnitt (131b) abgestützt ist, und wobei einer der beiden Befestigungseinrichtungen (114a oder 114b) fest auf dem einen Unterrohrabschnitt (131a oder 131b) und die jeweils andere Befestigungseinrichtung (114a oder 114b) auf dem anderen Unterrohrabschnitt (131b oder 131a) relativ dazu verschieblich abgestützt ist.

8. Dreirad nach einem der Ansprüche 1 bis 7, mit folgenden weiteren Merkmalen:
- mit einem Stauraum (SR), und
- der Stauraum (SR) ist auf der zu dem Sitz (13) und dem Hinterrad (7) gegenüberliegenden Seite zur Mittellängsebene (MLE) vorgesehen oder überwiegend vorgesehen.

9. Dreirad nach einem der Ansprüche 1 bis 8, **dadurch gekennzeichnet, dass** das vorzugsweise nicht lenkbare Hinterrad (7) außermittig mit Seitenversatz zur Mittellängsebene (MLE) am Dreirad-Rahmen (11) angeordnet ist.

10. Dreirad nach einem der Ansprüche 1 bis 9, **dadurch gekennzeichnet, dass** der Sitz (13) zu zumindest 80%, 85%, 90% oder zu zumindest 95% oder zu 100% auf der Seite der Mittellängsebene (MLE) angeordnet ist, auf der sich auch das außermittig verbaute Hinterrad (7) befindet.

11. Dreirad nach einen der Ansprüche 8 bis 10, **dadurch gekennzeichnet, dass** der Stauraum (SR) zu zumindest 80%, insbesondere zu zumindest 85%, 90%, 95% oder zu 100% auf der Seite der Mittellängsebene (MLE) angeordnet ist, die zu der anderen Seite gegenüberliegt, in der sich das Hinterrad (7) befindet.

12. Dreirad nach einem der Ansprüche 8 bis 11, **dadurch gekennzeichnet, dass** der Stauraum (SR) Einrichtungen zur Ablage und/oder zur Aufhängung von zu transportierenden Gütern aufweist.

13. Dreirad nach einem der Ansprüche 8 bis 12, **dadurch gekennzeichnet, dass** der Stauraum (SR) zumindest einen Lastboden (31) aufweist, der vorzugsweise platten-, brett- und/oder gitterförmig oder boxenförmig gestaltet ist.

14. Dreirad nach einem der Ansprüche 1 bis 13, **dadurch gekennzeichnet, dass** der Sitz (13) an einem Fahrradrahmen befestigt ist, auf welchem er mittels einer Verstelleinrichtung in Längsrichtung verstell- und arretierbar ist.

## Claims

1. Tricycle, with the following features:
- with two jointly steerable front wheels (3; 3a, 3b) which are positioned symmetrically to a vertical central longitudinal plane (CLP) running through the tricycle and can be rotated about a common front wheel axle line (5),
- with a back wheel (7) that is rotatable around a back wheel axle line (9),
- with a seat (13),
- that also a height adjustment device is provided for the seat (13),
- the height adjustment device (13) comprises a length adjustment device, by means of which the axle distance between the common axle lines running through the front wheels (3; 3a, 3b) when driving straight ahead and the axle line (9) running through the preferably non-steerable rear wheel (7) can be varied in size and can be fixed in the respective axle distance position, **characterised in that**
the one rear wheel is positioned off-centre to the central longitudinal plane (CLP) and asymmetrically and the seat is positioned off-centre and therefore asymmetrical to the central longitudinal plane or is arranged at least 75% off-centre, lying on the same side with respect to the central longitudinal plane (CLP) on which the rear wheel is also positioned off-centre.

2. Tricycle according to claim 1, **characterised in that** the tricycle framework (11) has a seat support system (33) which comprises a top tube (33a), which is supported via a rear tube (33b) on the tricycle framework (11), preferably in the form of a crossbeam (15) at least indirectly supporting the front wheels (3), and/or on the rear wheel axle (9a).

3. Tricycle according to claim 2, **characterised in that** the top tube (33a) is supported in the leading area on the crossbeam (15) and/or on both front wheel axles (5a) of both front wheels (3) at least indirectly.

4. Tricycle according to claim 2 or 3, **characterised in that** the top tube (33a) is supported at least indirectly on the down tube or load carrier (31) forming a part of the tricycle framework (11), preferably via the crossbeam (15), and **in that** the support of the top tube (33a) is supported at least indirectly on the down tube (31) by means of a first joint (43a) and the support of the rear tube (33b) is supported on the down tube (31), the remaining part of the tricycle framework (11) and/or on the rear wheel axle (9a) via a second joint mechanism (34b), wherein it is formed on the connection point between the top tube (33a) and the rear tube (33b) by a third joint connection (45a).

5. Tricycle according to claim 4, **characterised in that** the down tube (31) is equipped with a length adjustment device, whereby the distance between the leading joint (43) and the following joint (45) is changeable in its length and is fixable in the predefined length, whereby the height of the seat (13) is changeable.

6. Tricycle according to claim 4 or 5, **characterised in that** the down tube (31) is adjustable in terms of length and fixable telescopically into and out of itself.

7. Tricycle according to claim 6, **characterised in that** the down tube (31) or the load carrier (31) has a leading down tube section (131a) and a following down tube section (131b),
wherein the leading down tube section (131a) is supported at least indirectly via the front wheel axles (3') and the following down tube section (131b) is supported on its following end at least indirectly on the rear wheel axle (9'), wherein the loading base (14) is supported at least by two fixing devices (114a, 114b) on the one hand on the leading down tube section (113a) and on the other hand via the following down tube section (113b),
and wherein one of the two fixing devices (114a or 114b) is fixedly supported on one down tube section (113a or 113b) and the other fixing device (114a or 114b) is supported on the respective other down tube section (131b or 131a) displaceable relative thereto.

8. Tricycle according to one of the claims 1 to 7, with the following additional features:
- with a storage space (SS), and
- the storage space (SS) is provided or mainly provided on the side opposite the seat (13) and the rear wheel (7) with respect to the central longitudinal plane (CLP).

9. Tricycle according to one of the claims 1 to 8, **characterised in that** the preferably non-steerable rear wheel (7) is positioned off-centre on the tricycle framework (11) with lateral offset with respect to the central longitudinal plane (CLP).

10. Tricycle according to one of the claims 1 to 9, **characterised in that** the seat (13) is positioned at least 80%, 85%, 95% or at least 95% or up to 100% on the side of the central longitudinal plane (CLP), on which the rear wheel (7) installed off-centre is also located.

11. Tricycle according to one of the claims 8 to 10, **characterised in that** the storage space (SS) is positioned at least 80%, particularly at least 85%, 90%, 95% or to 100% on the side of the central longitudinal plane (CLP) which lies across from the other side in which the rear wheel (7) is located.

12. Tricycle according to one of the claims 8 to 11, **characterised in that** the storage space (SS) has devices for storing and/or for hanging goods to be transported.

13. Tricycle according to one of the claims 8 to 12, **characterised in that** the storage space (SS) at least has a loading base (31) which is preferably plate-shaped, plank-shaped and/or lattice-shaped or box-shaped.

14. Tricycle according to one of the claims 1 to 13, **characterised in that** the seat (13) is attached to a bicycle framework on which it is adjustable and lockable by means of an adjustment device in a longitudinal direction.

## Revendications

1. Tricycle présentant les particularités suivantes :
- il comporte deux roues avant (3 ; 3a, 3b) conjointement dirigeables, qui sont disposées symétriquement par rapport à un plan longitudinal médian (MLE) vertical traversant le tricycle et qui peuvent tourner sur une ligne d'axe de roue avant commune (5),
- il comporte une roue arrière (7) pouvant tourner sur une ligne d'axe de roue arrière (9),
- il comporte un siège (13),
- il est également prévu un dispositif de réglage en hauteur du siège (13),
- le dispositif de réglage en hauteur (13) comprend un dispositif de réglage en longueur grâce auquel de l'entraxe entre la ligne d'axe commune traversant les roues avant (3 ; 3a ; 3b) lors d'une avancée en ligne droite et la ligne d'axe (9) passant par la roue arrière (7), de préférence non dirigeable, est de grandeur modifiable et peut être fixé dans la position d'entraxe correspondante,
**caractérisé en ce que** ladite roue arrière est disposée décentrée et agencée asymétriquement par rapport au plan longitudinal médian (MLE), et le siège est disposé en étant décalé et donc agencé asymétriquement par rapport au plan longitudinal médian ou disposé à au moins 75 % sur le même côté, eu égard au plan longitudinal médian central, que celui où se trouve la roue arrière décentrée.

2. Tricycle selon la revendication 1, **caractérisé en ce que** le cadre du tricycle (11) présente un agencement de support de siège (33) qui comprend un tube supérieur (33a) qui est en appui, par le biais d'un tube arrière (33b), sur le cadre du tricycle (11) sous la forme de préférence d'une traverse (15) qui supporte au moins indirectement les roues avant (3) et/ou qui est en appui sur l'axe de roue arrière (9a).

3. Tricycle selon la revendication 2, **caractérisé en ce que** le tube supérieur (33a) est en appui au moins indirectement, dans la zone antérieure, sur la traverse (15) et/ou sur les deux axes (5a) des deux roues avant (3).

4. Tricycle selon la revendication 2 ou 3, **caractérisé en ce que** le tube supérieur (33a) est en appui au moins indirectement sur le tube inférieur ou support de charge (31) formant une partie du cadre du tricycle (11), de préférence par le biais de la traverse (15), et **en ce que** l'appui du tube supérieur (33a) est en appui au moins indirectement sur le tube inférieur (31) au moyen d'une première articulation (43a) et l'appui du tube arrière (33b) sur le tube inférieur (31), sur la partie restante du cadre du tricycle (11) et/ou sur l'axe de roue arrière (9a) est en appui au moyen d'un deuxième dispositif d'articulation (34b) formé au point de raccord entre le tube supérieur (33a) et le tube arrière (33b) par un troisième raccord articulé (45a).

5. Tricycle selon la revendication 4, **caractérisé en ce que** le tube inférieur (31) est pourvu d'un dispositif de modification en longueur permettant de modifier en longueur la distance entre l'articulation antérieure (43) et l'articulation postérieure (45) et de la fixer à la longueur prédéfinie, moyennant quoi la position en hauteur du siège (13) peut être modifiée.

6. Tricycle selon la revendication 4 ou 5, **caractérisé en ce que** le tube inférieur (31) peut être rentré et sorti de manière télescopique et fixé en position.

7. Tricycle selon la revendication 6, **caractérisé en ce que** le tube inférieur (31) ou support de charge (31) présente une section antérieure (131a) et une section qui lui est postérieure (131b), la section antérieure (131a) étant supportée au moins indirectement au moyen des axes de roue avant (3') et la section postérieure (131b) étant supportée à son extrémité postérieure au moins indirectement au niveau de l'axe de roue arrière (9'), le support de chargement (14) étant supporté d'une part au niveau de la section antérieure (131a) du tube inférieure au moins au moyen de deux dispositifs de fixation (114a, 114b) et d'autre part au moyen de la section postérieure (131b) du tube inférieure, et l'un des deux dispositifs de fixation (114a ou 114b) étant supporté fixe sur une section (131a ou 131b) du tube inférieur et l'autre dispositif de fixation (114a ou 114b) étant supporté déplaçable sur l'autre section (131b ou 131a) du tube inférieur.

8. Tricycle selon l'une des revendications 1 à 7, présentant les particularités supplémentaires suivantes :
- il comporte un espace porte-bagage (SR), et
- l'espace porte-bagage (SR) est prévu totalement ou majoritairement sur le côté opposé au siège (13) et à la roue arrière (7), eu égard au plan longitudinal médian (MLE).

9. Tricycle selon l'une des revendications 1 à 8, **caractérisé en ce que** la roue arrière (7) de préférence non dirigeable est disposée décentrée sur le cadre du tricycle (11) avec un décalage latéral par rapport au plan longitudinal médian (MLE).

10. Tricycle selon l'une des revendications 1 à 9, **caractérisé en ce que** le siège (13) est disposé à au moins 80 %, 85 %, 90 % ou au moins 95 % ou 100 % du côté du plan longitudinal médian (MLE) sur lequel se trouve également la roue arrière (7) décentrée.

11. Tricycle selon l'une des revendications 8 à 10, **caractérisé en ce que** l'espace porte-bagage (SR) est disposé à au moins 80 %, notamment à au moins 85 %, 90 %, 95 % ou 100 % du côté du plan longitudinal médian (MLE) qui est opposé au côté où se trouve la roue arrière (7).

12. Tricycle selon l'une des revendications 8 à 11, **caractérisé en ce que** l'espace porte-bagage (SR) comporte des dispositifs de réception et/ou d'accrochage de biens à transporter.

13. Tricycle selon l'une des revendications 8 à 12, **caractérisé en ce que** l'espace porte-bagage (SR) présente au moins un support de chargement (31) de préférence conçu sous la forme d'une plaque, d'une planche et/ou d'une grille ou d'une caissette.

14. Tricycle selon l'une des revendications 1 à 13, **caractérisé en ce que** le siège (13) est fixé sur un cadre de vélo sur lequel il peut être réglé et verrouillé dans le sens longitudinal au moyen d'un dispositif de réglage.
